# FASCICULE DE BREVET EUROPEEN

(11) **EP 3 224 889 B1**
(45) Date de publication et mention de la délivrance du brevet: **31.07.2019**
(21) Numéro de dépôt: 15800858.1
(22) Date de dépôt: 26.11.2015
(51) Int. Cl.: H01M 8/0438, H01M 8/04089, H01M 8/04119, H01M 8/1018, H01M 8/04111, H01M 8/04223, H01M 8/0432, H01M 8/04746, H01M 8/04828

(54) **SYSTÈME À PILE À COMBUSTIBLE**
BRENNSTOFFZELLENSYSTEM
FUEL CELL SYSTEM

(30) Priorité: 27.11.2014 FR 1461550
(43) Date de publication de la demande: 04.10.2017
(73) Titulaire: Compagnie Générale des Etablissements Michelin, 63000 Clermont-Ferrand (FR)
(72) Inventeur: PAGANELLI, Gino, 63040 Clermont-Ferrand Cedex 9 (FR); BRAILLARD, Vincent, 63040 Clermont-Ferrand Cedex 9 (FR)
(74) Mandataire: Roussy, Delphine
(86) Numéro de dépôt international: PCT/EP2015/077723
(87) Numéro de publication internationale: WO 2016/083489

(56) Documents cités:
- EP-A2- 1 469 543
- WO-A1-01/24298
- WO-A1-99/28985
- DE-A1- 19 929 472
- DE-A1-102012 020 130

## Description

### DOMAINE DE L'INVENTION

La présente invention se rapporte aux piles à combustibles, en particulier mais non exclusivement aux piles à combustible du type à électrolyte sous la forme d'une membrane polymère (c'est à dire de type PEFC pour Polymer Electrolyte Fuel Cell).

### ETAT DE LA TECHNIQUE

On sait que les piles à combustibles permettent la production directe d'énergie électrique par une réaction électrochimique d'oxydoréduction à partir d'un gaz carburant et d'un gaz comburant, sans passer par une conversion en énergie mécanique. Cette technologie semble prometteuse notamment pour des applications automobiles. Une pile à combustible comporte un empilement de cellules de base, chacune comprenant une anode, une cathode et une membrane échangeuse d'ions, faisant office d'électrolyte. Lors du fonctionnement d'une pile à combustible, deux réactions électrochimiques simultanées se produisent : une oxydation du carburant à l'anode, et une réduction de comburant à la cathode. Ces deux réactions produisent des ions, positifs et négatifs, qui se combinent au niveau de la membrane et produisent de l'électricité sous la forme d'une différence de potentiels. Dans le cas d'une pile à combustible oxygène-hydrogène, ce sont les ions H+ et O- qui se combinent.

Les assemblages membrane-électrodes, ou cellules, sont empilés en séries et séparés par une plaque bipolaire qui conduit les électrons de l'anode d'une cellule à la cathode de la cellule voisine. A cet effet, un canal est prévu sur toute la face des plaques bipolaires en contact avec la membrane. Chaque canal possède une entrée par laquelle pénètre le carburant ou le comburant, et une sortie par laquelle sont évacués les gaz neutres, l'eau générée par la réaction électrochimique, et l'humidité résiduelle de l'hydrogène de son côté. Par la suite, on désignera par « canal cathodique » un canal en contact avec la cathode d'une cellule.

L'alimentation en gaz comburant, notamment dans le cas où on utilise de l'air, est effectuée par le biais d'un compresseur, situé dans un circuit de gaz en amont de la pile à combustible. On a constaté que, du fait de la compression, les gaz sortant du compresseur sont chauds et secs, et ont donc tendance à assécher la membrane polymère, ce qui provoque une baisse des performances de la pile, et dégrade ladite membrane. En effet, la conductivité protonique de la membrane augmente avec l'humidité, et il est donc utile de maintenir un certain niveau d'humidité pour obtenir des performances accrues.

Il est donc utile d'humidifier les gaz avant qu'ils n'atteignent la membrane. A cet effet, on connaît des humidificateurs dans lesquels l'humidité contenue dans les gaz sortants de la pile est transférée, par perméation, vers les gaz secs entrants dans la pile. Ces humidificateurs se présentent sous la forme de boitiers de taille relativement importante. Par ailleurs, afin de permettre la perméation, une membrane, par exemple en Nafïon®, est utilisée. De telles membranes s'avèrent relativement coûteuses. En outre, on a constaté qu'avec un tel moyen d'humification, l'humidité n'était pas homogène dans le canal d'acheminement des gaz situés sur la plaque bipolaire de la pile à combustible. En effet, le gaz pré-humidifié entrant dans le canal a tendance à se charger encore en humidité tout au long du canal, avec pour conséquence une humidité beaucoup plus importante en sortie qu'en entrée de canal.

Le document WO99/28985 décrit un système de pile à combustible avec un compresseur, un système d'aiguillage, un réservoir d'humidité et un capteur de pression.

L'objectif de la présente invention est donc de proposer une solution pour humidifier les gaz circulant dans le canal cathodique d'une pile à combustible tout en remédiant aux inconvénients de l'art antérieur.

### BREVE DESCRIPTION DE L'INVENTION

L'invention propose ainsi un système à pile à combustible selon la revendication 1 comprenant un empilement de cellules électrochimiques formant une pile à combustible à membrane polymère échangeuse d'ions, un circuit d'alimentation en gaz carburant et un circuit d'alimentation en gaz comburant,
ledit circuit d'alimentation en gaz comburant comprenant un compresseur destiné à compresser l'air ambiant avant son entrée dans la pile à combustible, et un échappement de sortie destiné à évacuer les gaz sortant de la pile à combustible,
ledit circuit d'alimentation étant relié à la pile à combustible en un premier et un second points d'accès,
le système comprenant en outre un élément d'aiguillage possédant deux positions : une première position dans laquelle la sortie du compresseur est reliée au premier point d'accès, et le second point d'accès est relié à l'échappement de sortie, et une seconde position dans laquelle la sortie du compresseur est reliée au second point d'accès, et le premier point d'accès est relié à l'échappement de sortie, et le système étant caractérisé en ce qu'il comprend un réservoir d'humidité positionné dans le circuit d'alimentation en gaz comburant, en amont du premier point d'accès (7).

Un tel système permet, ainsi qu'expliqué par la suite à l'aide des figures, de conserver une bonne humidification de la membrane, tout en s'abstenant d'utiliser un humidificateur encombrant et coûteux tel que celui utilisé dans l'état de la technique.

On sait que l'eau générée par la réaction électrochimique dans une pile à combustible est généralement produite de façon homogène sur toute la surface de la membrane d'une cellule. En revanche, à cette eau produite par le fonctionnement de la pile s'ajoute l'eau transportée par les gaz circulant dans les canaux. Par conséquent, on a constaté que la quantité d'eau totale, et donc l'humidité, n'était pas homogène sur la surface active, et augmentait dans le sens d'écoulement du gaz.

Or, dans un système selon la présente invention, le sens d'écoulement des gaz varie selon la position de l'élément d'aiguillage, ce qui conduit à une variation d'humidité, surtout dans le cas où le système selon l'invention est piloté selon un cycle périodique entre la première position et la seconde position de l'élément d'aiguillage.

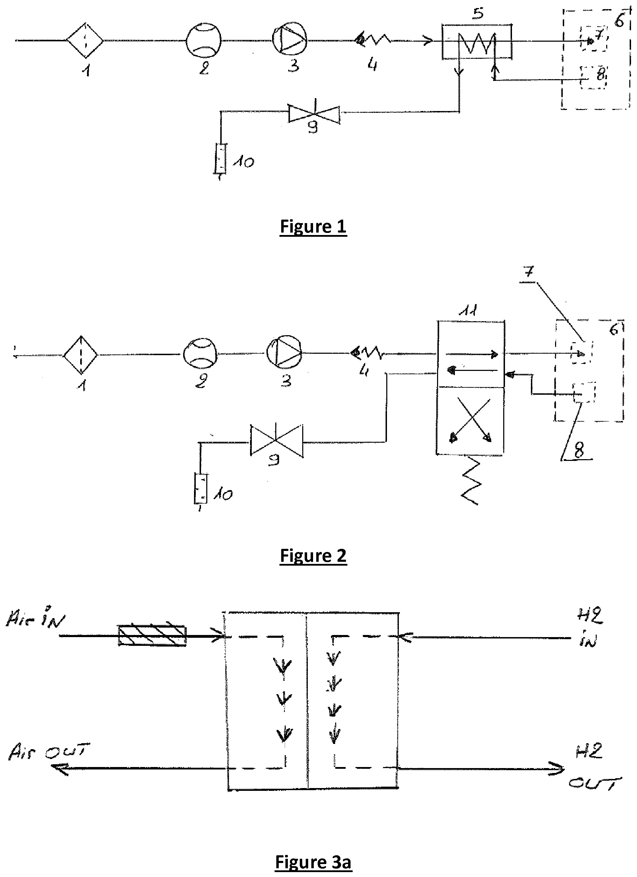

En effet, lorsque l'élément d'aiguillage est dans la première position, le flux de gaz comburant est dans le même sens que le flux de gaz carburant, nous appellerons cette situation « co-flux ». Un exemple de cette situation est montré en figure 3a où l'on constate que les sens de circulation de l'air et de l'hydrogène sont les mêmes.

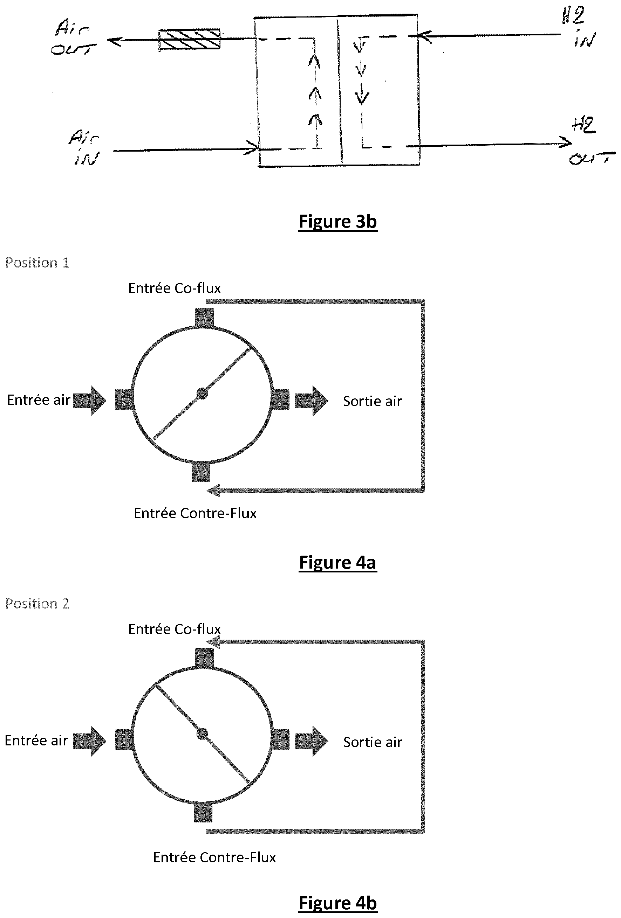

A l'inverse, lorsque l'élément d'aiguillage est dans la seconde position, le flux de gaz comburant est dans le sens opposé au flux de gaz carburant, nous appellerons cette situation « contre-flux ». Un exemple de cette situation est montré en figure 3b où l'on constate que les sens de circulation de l'air et de l'hydrogène sont opposés.

Puisque l'humidité augmente dans le sens d'écoulement du gaz, en situation de « contre-flux », on retrouve une humidité relativement homogène sur l'ensemble de la membrane. En revanche, en situation de « co-flux », la partie de la membrane correspondant à l'entrée des gaz se retrouve avec un niveau de sécheresse beaucoup plus élevé que la partie de la membrane correspondant à la sortie des gaz.

Cette alternance « co-flux », «contre-flux» conduit donc à une variation hygrométrique forte au niveau de l'assemblage membrane électrode, et peut conduire à une dégradation prématurée de la pile à combustible.

Dans l'ensemble de la description on utilisera indifféremment les expressions « première position » et « co-flux », et les expressions « seconde position » et « contre-flux ». Les premières de ces expressions faisant référence à la position de l'élément d'aiguillage, là où les secondes font plutôt référence au mouvement du gaz en découlant.

Toutefois, cette variation hygrométrique est limitée, dans la présente invention, par la présence d'un réservoir d'humidité dans le circuit d'alimentation en comburant, en amont du premier point d'accès. En effet, lorsque la pile fonctionne en position « contre-flux », le réservoir d'humidité est traversé par les gaz sortant de la pile, et donc chargés en humidité. Pendant cette phase, le réservoir d'humidité se charge en eau. Ensuite, lorsque la pile fonctionne en position « co-flux », l'humidité est restituée au gaz avant son entrée dans la pile à combustible, ce qui a pour conséquence de limiter fortement les variations d'humidité vues par les membranes.

Dans une réalisation préférentielle, le réservoir d'humidité est composé d'un matériau fortement hygroscopique, par exemple de la fibre de papier et coton structuré en nid d'abeille. Dans un autre exemple, on peut envisager l'utilisation de matériaux à base de cordiérite. Le volume du réservoir d'humidité est préférentiellement adapté en fonction de la puissance de la PAC. Par exemple pour une pile à combustible de 10kW, le réservoir d'humidité est constitué de fibre de papier et présente un volume d'environ 250 cm³. Dans une réalisation préférentielle, les cellules électrochimiques sont séparées par des plaques bipolaires, un canal étant ménagé dans chaque face d'une plaque bipolaire pour la circulation des gaz carburant et comburant, caractérisé en ce que les premier et second points d'accès forment une entrée et une sortie d'un canal. Ainsi, lorsque l'élément d'aiguillage est situé dans la première position, le gaz circule dans le canal du premier point vers le second point, et inversement lorsque l'élément d'aiguillage est situé dans la deuxième position.

Dans une réalisation préférentielle, l'élément d'aiguillage est une vanne quatre voies. Cette vanne peut être une vanne monostable ou bistable.

On a constaté que la dynamique de la vanne, à savoir le temps de commutation d'une position à une autre, avait un impact sur la durée de la rupture du flux d'entrée de gaz comburant lors d'un changement de position. Or, une rupture prolongée de flux d'entrée conduit à une pénurie temporaire de comburant, et à une rupture de puissance en sortie de la pile à combustible.

Pour remédier à cela, dans une réalisation préférentielle, la vanne est équipée d'un moteur angulaire à aimant permanent, dont le fonctionnement sera ultérieurement détaillé à l'aide de figures. Ce moteur permet une commutation plus rapide, et est utilisé de manière à minimiser le temps d'interruption de l'alimentation en gaz comburant en entrée de la pile. De manière avantageuse, le moteur est installé de telle sorte que l'axe du moteur soit directement relié à l'axe de la vanne quatre voies. On précise ici que la caractéristique consistant à utiliser un tel moteur couplé avec un élément d'aiguillage pourrait être revendiqué indépendamment de l'utilisation d'un réservoir d'humidité tel que précédemment décrit. Le système comprend deux capteurs de pression installés dans le circuit d'alimentation en gaz comburant, entre l'élément d'aiguillage et respectivement les premier et second points d'accès. Ces capteurs de pression permettent de vérifier en permanence le fonctionnement correct de la vanne, par comparaison des pressions présentes en entrée et en sortie de la pile à combustible. Alternativement il est aussi possible de vérifier l'inversement régulier du sens d'écoulement de l'air par corrélation avec une mesure de la température de l'air au niveau de l'un des deux d'accès à la pile à combustible. En effet, l'air traversant la pile se trouvant réchauffé par cette dernière, l'inversion du sens d'écoulement conduit à une inversion de la tendance d'évolution de la température de l'air mesurée au niveau d'un accès de la pile.

Dans une autre réalisation avantageuse, l'élément d'aiguillage est installé dans une plaque d'extrémité de la pile à combustible comprenant également un ou plusieurs systèmes de gestion et/ou de pilotage de la pile à combustible, ou au moins un composant d'un tel système. Une telle plaque sera appelée « plaque système » dans la suite de la description. Un tel positionnement permet d'augmenter la compacité de l'ensemble du système de pile à combustible, et permet également de faciliter l'intégration des différents composants.

En outre, le positionnement de l'élément d'aiguillage au niveau de la plaque système, moins exposée aux conditions climatiques extérieures, permet de garantir un fonctionnement de l'élément d'aiguillage quelle que soit la température extérieure à laquelle est soumise la pile. En effet, on a constaté que lors de démarrage de la pile à des températures négatives, la commutation de l'élément d'aiguillage était parfois rendue impossible par des résidus d'humidité transformés en glace. En outre, le positionnement de l'élément d'aiguillage au niveau de la plaque système, permet, en raison de la proximité immédiate, de minimiser le volume des conduites entre l'élément d'aiguillage et les canaux d'alimentation en air de la pile à combustible. Ainsi le volume d'air appauvri sortant de la pile à combustible se trouvant réintroduit à chaque inversion du sens d'écoulement de l'air se trouve réduit et permet par conséquent de minimiser la rupture de puissance mentionnée précédemment.

L'invention concerne également un procédé de pilotage d'un système à pile à combustible selon l'invention, le procédé comprenant l'étape de piloter l'élément d'aiguillage de manière à le faire passer de la première à la deuxième position selon un cycle régulier. Ce cycle est, dans une réalisation préférentielle, d'une durée comprise entre quelques secondes et quelques minutes, par exemple entre 15 et 30 secondes.

De manière préférentielle encore, le procédé de pilotage est tel que ce cycle régulier est asymétrique, c'est-à-dire que la durée pendant laquelle l'élément d'aiguillage reste dans la première position est différente de la durée pendant laquelle il reste dans la seconde position. Cette asymétrie permet de prendre en compte le caractère non symétrique du comportement interne de la pile étant donné que le sens de circulation du gaz hydrogène n'est lui pas inversé. On comprend qu'en position « contre-flux », l'air entrant circule dans le même sens que le gaz hydrogène sortant, et vient donc lui prélever de l'humidité au travers de la membrane. Cette situation est favorable pour l'humidification de la membrane coté air et pour le chargement du réservoir d'humidité, cette phase doit normalement durer plus longtemps que la phase « co-flux », mais ne peut pas durer trop longtemps car elle conduirait à un assèchement du coté anodique. Le bon équilibre entre durée du « co-flux » et de « contre-flux » doit être réglé pour optimiser les performances globales de la pile à combustible.

Par ailleurs, dans une réalisation préférentielle, le procédé comprend une étape de mesure de température au sein de la pile à combustible, et dans ce cas le pilotage de l'élément d'aiguillage n'est effectué que lorsque la température devient supérieure à un seuil prédéterminé. Une telle caractéristique permet d'améliorer les conditions de démarrage à froid de la pile à combustible. En effet, tant que la pile n'est pas dégelée, on n'effectue pas l'alternance, ce qui évite d'humidifier l'ensemble du canal alors même que la température dans la pile entraînerait un gel immédiat de l'eau.

Par ailleurs, un procédé de pilotage selon l'invention permet également, dans une réalisation préférentielle, de provoquer une pénurie d'air régulière à l'entrée de la pile à combustible. Une telle pénurie permet un maintien des performances de la pile sur une durée plus longue. En effet, la cathode d'une cellule est chargée en catalyseur, à savoir un composé capable d'augmenter la vitesse de réaction dont la cathode est le siège. Or, l'oxydation progressive du platine utilisé dans le catalyseur de la cathode conduit à une baisse de performance se traduisant par une baisse de tension. La pénurie régulière d'air permet que la réaction au niveau du platine s'inverse et devienne une réaction de réduction, ce qui permet de préserver les performances du catalyseur.

### BREVE DESCRIPTION DES FIGURES

D'autres avantages et caractéristiques de l'invention apparaîtront avec la description, effectuée à titre non limitatif, de différentes mises en oeuvre illustrées par les figures suivantes :
- la figure 1 montre le circuit cathodique d'un système à pile à combustible de l'état de la technique,
- la figure 2 montre le circuit cathodique d'un système à pile à combustible selon la présente invention.
- Les figures 3a et 3b, déjà décrites, montrent la circulation des gaz dans l'assemblage membrane électrode d'une pile à combustible, dans une situation de « co-flux » et une situation de « contre-flux ».
- Les figures 4a et 4b montrent le fonctionnement d'une vanne quatre voies couplée à un moteur angulaire selon l'invention.
- La figure 5 montre la position angulaire du tambour de la vanne lors de la commutation entre deux positions de la vanne,
- La figure 6 montre une vue en coupe de l'ensemble moteur/vanne mise en oeuvre dans un système selon l'invention.

### DESCRIPTION DE MEILLEURS MODES DE REALISATION DE L'INVENTION

A la figure 1, on voit un système comprenant une pile à combustible 6 du type à électrolyte sous la forme d'une membrane polymère (c'est à dire de type PEFC pour Polymer Electrolyte Fuel Cell ou PEM pour Proton Exchange Membrane). La pile à combustible 6 est approvisionnée par deux gaz, à savoir le carburant (l'hydrogène stocké ou fabriqué à bord du véhicule) et le comburant (air ou l'oxygène pur) qui alimentent les électrodes des cellules électrochimiques. A cet effet, le système comprend deux circuits de gaz : un circuit d'alimentation en gaz carburant, également appelé circuit anodique, et un circuit d'alimentation en gaz comburant, également appelé circuit cathodique. La figure 1 ne représente que les éléments du circuit cathodique utiles à la compréhension de l'invention. Bien entendu, la présente invention n'est pas limitée à ces éléments, et peut inclure tous les dispositifs connus de l'homme du métier et utilisables dans le cas d'un tel système à pile à combustible.

Ainsi, l'installation comprend un circuit d'alimentation en air côté cathode. Ce circuit comprend un filtre d'entrée d'air 1, un débitmètre 2 permettant de mesurer le débit de l'air entrant, un compresseur d'air 3, et une vanne anti-retour 4, permettant d'éviter que du gaz sortant de la pile à combustible ne revienne en direction du compresseur 3. Comme indiqué précédemment, à la sortie du compresseur 3, l'air est chaud et sec, et risquerait donc, s'il était introduit pendant une trop longue durée dans la pile à combustible, de dégrader la membrane polymère. Par conséquent, dans une pile classique, un humidificateur 5, par exemple du type de ceux de la marque Permapure® , est placé en amont de l'entrée 7 qui permet l'entrée de gaz comburant dans la pile à combustible.

Le principe de l'humidificateur 5 est le suivant : on sait que les gaz sortants de la pile à combustible sont chargés en humidité, du fait de la demi-réaction chimique se produisant à la cathode O2 + 4 H⁺ + 4 e- = 2 H2O qui produit de l'eau. Ce gaz sortant par la sortie 8 de la pile est introduit dans l'humidificateur 5, en même temps que le gaz sec sortant du compresseur 3. L'humidificateur 5 comprend une membrane polymère, par exemple de type Nafïon®. A travers cette membrane, une partie de l'humidité présente dans les gaz sortants de la pile à combustible est transférée vers les gaz secs avant leur entrée dans la pile à combustible, ce qui permet de garantir un niveau d'humidité suffisant pour ne pas endommager la membrane polymère de la pile à combustible 6. Les gaz sortants de la pile sont ensuite dirigés, après leur passage dans l'humidificateur 5, vers un échappement de sortie 10, via une vanne de régulation de pression 9. Une telle configuration présente différents inconvénients liés à l'utilisation d'un tel humidificateur. En effet, cet humidificateur est très encombrant, puisqu'il représente une fraction du volume non négligeable de la pile à combustible 6 (il est à noter que les dimensions utilisées sur les figures 1 et 2 ne sont pas représentatives de la réalité). Or, dans le cas d'une application mobile, telle que l'utilisation dans un véhicule, il est utile de pouvoir réduire au maximum le poids et l'encombrement de l'ensemble. Par ailleurs les membranes polymères utilisées dans l'humidificateur sont relativement chères. En outre, dans le cas d'une utilisation d'un tel humidificateur, l'humidité n'est pas homogène dans le canal de la plaque bipolaire côté cathode. En effet, les gaz se chargeant en humidité au cours de leur parcours dans le canal, et donc de la réaction électrochimique, il en résulte une très forte humidité en fin de canal.

Pour remédier à ces inconvénients, la présente invention propose une solution dont un exemple de mise en oeuvre est montré en figure 2. Cette installation comprend une vanne 11, reliée d'un côté à la vanne anti-retour 4 et à la vanne de régulation de pression 9, et de l'autre côté à la pile à combustible, au niveau des entrée et sortie 7 et 8. La vanne 11 est une vanne quatre voies, qui peut être monostable ou bistable. Le choix entre les deux s'effectuera notamment au vu des contraintes énergétiques du système, puisque dans un cas il faut maintenir un courant électrique pour maintenir la vanne dans la seconde position, alors que dans l'autre cas une simple impulsion permet de faire passer la vanne de l'une à l'autre des positions, ce qui se révèle avantageux en termes de consommation d'énergie.

Grâce au pilotage de la vanne 11, la sortie du compresseur d'air 3 est reliée alternativement à l'entrée 7 de la pile à combustible, et à la sortie 8 de la pile à combustible. On utilise ici les termes « entrée » et « sortie » par similitude avec la figure 1, mais dans la configuration de la figure 2 ces points d'accès 7 et 8 sont alternativement des entrées et des sorties de la pile à combustible. Ainsi, dans une première position, le gaz issu du compresseur 3 pénètre dans la pile par l'entrée 7, il parcourt le canal situé sur la plaque bipolaire, parcours au cours duquel la réaction électrochimique se produit. Les gaz résultant de cette réaction ressortent de la pile par la sortie 8 et sont alors dirigés vers la vanne de régulation de sortie 9. Dans une seconde position, le gaz issu du compresseur d'air 3 est dirigé vers la sortie 8, il parcourt le canal situé sur la plaque bipolaire jusqu'à l'entrée 7, et les gaz sortants sont ensuite dirigés, via la vanne 11, vers la vanne de régulation de sortie 9.

Ainsi, le gaz circule alternativement dans un sens et dans l'autre dans le canal. Or, ainsi qu'expliqué précédemment, lors de son trajet dans le canal, le gaz se charge en eau de par la réaction électrochimique qui se produit. Ainsi, la partie du canal qui se trouve en fin de trajet présente un taux d'humidité très élevé. En alternant l'entrée du gaz, on permet ainsi au gaz sec issu du compresseur 3 d'entrer dans la pile par une portion de canal présentant une humidité élevée, et ainsi de se charger en eau, afin de ne pas dégrader la membrane polymère. Ainsi, on fournit un système permettant de garantir une humidification correcte des gaz en contact avec la membrane sans qu'il ne soit nécessaire de les humidifier avant leur entrée dans la pile 6. Ceci est très avantageux en termes de coût et d'encombrement, puisque la vanne quatre voies est un dispositif courant, disponible à faible coût et présentant un faible encombrement.

En outre, l'alternance d'entrée de gaz entre les points d'accès 7 et 8 permet d'alterner le sens de parcours du gaz dans le canal, et ainsi d'homogénéiser l'humidité tout au long de ce canal. Ainsi, l'humidité varie de manière parabolique le long du canal, avec un point haut atteint au milieu du canal, sans atteindre les très hauts niveaux atteints en fin de canal dans un système classique.

Les figures 4a et 4b montrent respectivement une première et seconde position de la vanne quatre voies, activée par un moteur angulaire à aimant permanent, fonctionnant tel un électro-aimant. La figure 4a correspond à une situation de « co-flux », et la figure 4b correspond à une situation de « contre-flux ».

De manière préférentielle, le pilotage de cette vanne est asymétrique. En effet, la situation de « co-flux » a tendance à assécher la membrane plus vite que la situation de « contre-flux », et il est donc avantageux d'avoir un cycle dans lequel la situation de « co-flux » dure entre 5 et 15 secondes, et la situation de « contre-flux » entre 10 et 25 secondes.

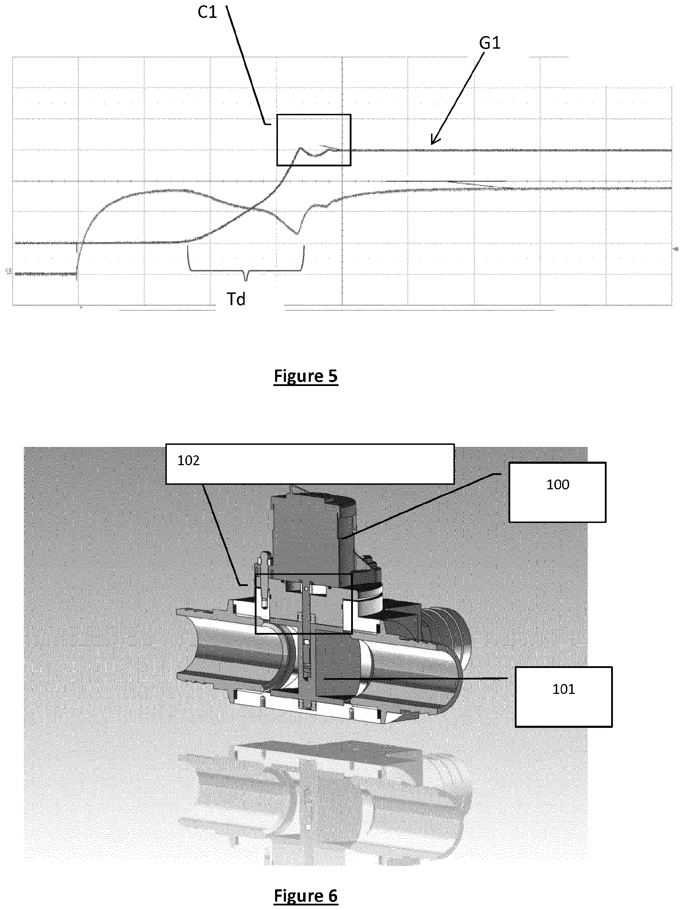

La figure 5 montre, sur la courbe G1 la position angulaire du tambour de la vanne lors de la commutation entre deux positions de la vanne. On constate ainsi que le temps de déplacement tu tambour Td est inférieur à 40 millisecondes, ce qui permet de ne pas observer de rupture de puissance en sortie de la pile à combustible, puisque l'effet capacitif de la pile est suffisant pour maintenir la puissance pendant la courte commutation.

De manière préférentielle, et comme montré en figure 6, l'axe du moteur 100 et couplé avec l'axe de la vanne quatre voies. En outre, des butées élastiques 102 sont avantageusement installées pour absorber l'énergie emmagasinée par le tambour 101 pendant son déplacement, et limiter le phénomène de rebond, qui apparaît dans le cadre C1 sur la figure 5.

Ainsi, la présente invention permet de fournir un système à pile à combustible tel que l'humidification des gaz est préservée, sans augmenter le coût et l'encombrement du système de manière démesurée.

## Revendications

1. Système à pile à combustible comprenant un empilement de cellules électrochimiques formant pile à combustible (6) à membrane polymère échangeuse d'ions, un circuit d'alimentation en gaz carburant et un circuit d'alimentation en gaz comburant,
ledit circuit d'alimentation en gaz comburant comprenant un compresseur (3) destiné à compressé l'air ambiant avant son entrée dans la pile à combustible (6), et un échappement de sortie (10) destiné à évacuer les gaz sortant de la pile à combustible,
ledit circuit d'alimentation étant relié à la pile à combustible en un premier (7) et un second points (8) d'accès,
le système comprenant en outre un élément d'aiguillage (11) possédant deux positions : une première position dans laquelle la sortie du compresseur (3) est reliée au premier point d'accès (7), et le second point d'accès (8) est relié à l'échappement de sortie (10), et une seconde position dans laquelle la sortie du compresseur (3) est reliée au second point d'accès (8), et le premier point d'accès (7) est relié à l'échappement de sortie (10), et le système comprenant un réservoir d'humidité positionné dans le circuit d'alimentation en gaz comburant, en amont du premier point d'accès (7),
le système étant **caractérisé en ce qu'**il comprend deux capteurs de pression installés dans le circuit d'alimentation en gaz comburant, entre l'élément d'aiguillage et respectivement les premier et second points d'accès.

2. Système selon la revendication 1, dans lequel le réservoir d'humidité est composé d'un matériau hygroscopique.

3. Système selon la revendication 1 ou 2, dans lequel les cellules électrochimiques sont séparées par des plaques bipolaires, un canal étant ménagé dans chaque face d'une plaque bipolaire pour la circulation des gaz carburant et comburant, **caractérisé en ce que** les premier et second points d'accès forment une entrée et une sortie d'un canal.

4. Système selon l'une des revendications 1 à 3, dans lequel l'élément d'aiguillage est une vanne quatre voies.

5. Système selon la revendication 4 dans lequel l'élément d'aiguillage comprend un moteur angulaire aimant permanent couplé à la vanne quatre voies.

6. Système selon l'une des revendications précédentes, dans lequel l'élément d'aiguillage est installé dans plaque d'extrémité de la pile à combustible comprenant également un ou plusieurs systèmes de gestion de la pile à combustible.

7. Procédé de pilotage d'un système à pile à combustible selon l'une des revendications précédentes, le procédé comprenant l'étape de piloter l'élément d'aiguillage de manière à le faire passer de la première à la deuxième position selon un cycle régulier asymétrique.

8. Procédé de pilotage selon la revendication 7, dans lequel le cycle régulier a une durée de 15 secondes.

9. Procédé de pilotage selon la revendication 7 ou 8, comprenant une étape de mesure de température au sein de la pile à combustible, et dans lequel le pilotage de l'élément d'aiguillage n'est effectué que lorsque la température de la pile à combustible devient supérieure à un seuil prédéterminé.

## Patentansprüche

1. Brennstoffzellensystem umfassend einen Stapel elektrochemischer Zellen, die eine Brennstoffzelle (6) mit Ionenaustausch-Polymermembran bilden, einen Kreis zur Versorgung mit Brennstoffgas und einen Kreis zur Versorgung mit verbrennungsförderndem Gas, der Kreis zur Versorgung mit verbrennungsförderndem Gas umfassend einen Kompressor (3), der dazu bestimmt ist, die Umgebungsluft vor ihrem Eintritt in die Brennstoffzelle (6) zu komprimiert, und einen Austrittsauslass (10), der dazu bestimmt ist, die Gase abzulassen, die aus der Brennstoffzelle austreten, wobei der Kreis zur Versorgung an einem ersten (7) und einem zweiten Zugangspunkt (8) mit der Brennstoffzelle verbunden ist,
das System ferner umfassend ein Stellelement (11), das zwei Positionen aufweist: eine erste Position, in welcher der Austritt des Kompressors (3) mit dem ersten Zugangspunkt (7) und der zweite Zugangspunkt (8) mit dem Austrittsauslass (10) verbunden ist, und eine zweite Position, in welcher der Austritt des Kompressors (3) mit dem zweiten Zugangspunkt (8) und der erste Zugangspunkt (7) mit dem Austrittsauslass (10) verbunden ist, und wobei das System ein Feuchtigkeitsreservoir umfasst, das in dem Kreis zur Versorgung mit verbrennungsförderndem Gas stromauf des ersten Zugangspunkts (7) positioniert ist, wobei das System **dadurch gekennzeichnet ist, dass** es zwei Drucksensoren umfasst, die in dem Kreis zur Versorgung mit verbrennungsförderndem Gas zwischen dem Stellelement und jeweils dem ersten und zweiten Zugangspunkt installiert sind.

2. System nach Anspruch 1, wobei das Feuchtigkeitsreservoir von einem hygroskopischen Material gebildet ist.

3. System nach Anspruch 1 oder 2, wobei die elektrochemischen Zellen durch bipolare Platten getrennt sind, wobei ein Kanal in jeder Seite einer bipolaren Platte für die Zirkulation des Brennstoffgases und des verbrennungsfördernden Gases eingerichtet ist, **dadurch gekennzeichnet, dass** der erste und der zweite Zugangspunkt einen Eintritt und einen Austritt eines Kanals bilden.

4. System nach einem der Ansprüche 1 bis 3, wobei das Stellelement ein Vierwegeventil ist.

5. System nach Anspruch 4, wobei das Stellelement einen Winkelmotor Dauermagnet umfasst, der an das Vierwegeventil gekoppelt ist.

6. System nach einem der vorhergehenden Ansprüche, wobei das Stellelement in Endplatte der Brennstoffzelle installiert ist, die ebenfalls ein oder mehrere Systeme zur Verwaltung der Brennstoffzelle umfasst.

7. Verfahren zur Steuerung eines Brennstoffzellensystems nach einem der vorhergehenden Ansprüche, das Verfahren umfassend den Schritt des Steuerns des Stellelements, so dass es gemäß einem asymmetrischen regelmäßigen Zyklus aus der ersten in die zweite Position wechselt.

8. Verfahren zur Steuerung nach Anspruch 7, wobei der regelmäßige Zyklus eine Dauer von 15 Sekunden aufweist.

9. Verfahren zur Steuerung nach Anspruch 7 oder 8, umfassend einen Schritt des Messens einer Temperatur innerhalb der Brennstoffzelle, und wobei das Steuern des Stellelements nur ausgeführt wird, wenn die Temperatur der Brennstoffzelle höher als eine vorbestimmte Schwelle wird.

## Claims

1. Fuel cell system comprising a stack of electrochemical cells forming a polymer ionexchange membrane fuel cell (6), a fuel gas supply circuit and an oxidant gas supply circuit,
said oxidant gas supply circuit comprising a compressor (3) intended to compress the ambient air before it enters the fuel cell (6), and an outlet exhaust (10) intended to discharge the gases leaving the fuel cell,
said supply circuit being connected to the fuel cell at a first access point (7) and a second access point (8),
the system additionally comprising a switching element (11) that has two positions: a first position in which the outlet of the compressor (3) is connected to the first access point (7), and the second access point (8) is connected to the outlet exhaust (10), and a second position in which the outlet of the compressor (3) is connected to the second access point (8), and the first access point (7) is connected to the outlet exhaust (10), and the system comprising a moisture reservoir positioned in the oxidant gas supply circuit, upstream of the first access point (7),
the system being **characterized in that** it comprises two pressure sensors installed in the oxidant gas supply circuit, between the switching element and the first and second access points respectively.

2. System according to Claim 1, in which the moisture reservoir is composed of a hygroscopic material.

3. System according to Claim 1 or 2, in which the electrochemical cells are separated by bipolar plates, a channel being made in each face of a bipolar plate for the circulation of the fuel and oxidant gases, **characterized in that** the first and second access points form an inlet and an outlet of a channel.

4. System according to one of Claims 1 to 3, in which the switching element is a four-way valve.

5. System according to Claim 4, in which the switching element comprises a permanent-magnet angular motor coupled to the four-way valve.

6. System according to one of the preceding claims, in which the switching element is installed in an end plate of the fuel cell also comprising one or more fuel-cell management systems.

7. Process for controlling a fuel cell system according to one of the preceding claims, the process comprising the step of controlling the switching element so as to move it from the first position to the second position according to an asymmetric regular cycle.

8. Control process according to Claim7, in which the regular cycle has a duration of 15 seconds.

9. Control process according to Claim 7 or 8, comprising a step of measuring the temperature within the fuel cell, and in which the control of the switching element only takes place when the temperature of the fuel cell becomes higher than a predetermined threshold.
